# EUROPÄISCHE PATENTSCHRIFT

(11) **EP 0 777 115 B1**
(45) Veröffentlichungstag und Bekanntmachung des Hinweises auf die Patenterteilung: **19.01.2005**
(21) Anmeldenummer: 96810790.4
(22) Anmeldetag: 14.11.1996
(51) Int. Cl.: G01K 1/12

(54) **Temperatursonde**
Temperature probe
Sonde de température

(30) Priorität: 01.12.1995 DE 19544880
(43) Veröffentlichungstag der Anmeldung: 04.06.1997
(73) Patentinhaber: ALSTOM Technology Ltd, 5400 Baden (CH)
(72) Erfinder: Deak, Anton, 5415 Nussbaumen (CH); Marchmont, Caroline, 5306 Tegerfelden (CH); Ngo-Beelmann, Ung-Lap, 76199 Karlsruhe (DE)

(56) Entgegenhaltungen:
- DE-B- 1 138 252
- JP-A- 57 086 725
- US-A- 2 930 827
- US-A- 3 596 518

## Beschreibung

### TECHNISCHES GEBIET

Die vorliegende Erfindung bezieht sich auf das Gebiet der Temperaturmesstechnik. Sie betrifft eine Temperatursonde, wie sie im Oberbegriff des ersten Anspruchs beschrieben ist.

### STAND DER TECHNIK

Derartige Temperatursonden, insbesondere für den Einsatz im Abgasdiffusor einer Gasturbine sind allgemein bekannt. Die Temperatursonden werden zu diesem Zweck in entsprechenden Öffnungen am Abgasdiffusor der Turbine eingesetzt, wobei ein Sondenrohr, welches die eigentlichen Messelemente enthält, in den Abgasstrom hineinragt. Hier ist eine Anzahl Messelemente in einzelnen Messräumen über die Länge des Sondenrohres verteilt angeordnet, und die gesamte Temperatursonde ist für eine typische Abgastemperatur bis 800 °C ausgelegt. Jeder Messraum ist als quer zur Sondenrohrachse orientierter und das Sondenrohr mit einer lichten Weite hindurchgehender Durchströmkanal ausgebildet, in dessen Mittelpunkt die Verbindungsstelle eines installierten Thermoelementes plaziert ist. Um Thermoelemente derart zu lokalisieren, werden sie jeweils in der Nähe des zugehörigen Durchströmkanals mittelbar im Sondenrohr fixiert. Eine zweite Befestigung stellt für derart installierte Thermoelemente eine übliche gasdichte Sondenrohrdurchführung dar, mit welcher eine Temperatursonde an einer Abgasdiffusorwand befestigt ist.

Das Sondenrohr und das Thermoelement unterliegen aufgrund ihrer Expansionskoeffizienten einer unterschiedlichen thermischen Ausdehnung. Um keine mechanische Spannungsbeanspruchung des Thermoelementes zu verursachen, muss das Thermoelement zwischen der Fixierung in der Nähe des Durchströmkanals und der gasdichten Sondenrohrdurchführung eine lose Kompensationsschlaufe aufweisen. Hierdurch soll das Thermoelement auch bei thermischer Expansion des Sondenrohres von mechanischen Spannungen und der damit verbundenen Bruchgefahr verschont bleiben.
Ein Thermoelement ist aber neben den thermischen Einflüssen ebenfalls mechanischen Schwingungen des gesamten Anlagensystem ausgesetzt. Diese mechanischen und thermischen Beanspruchungen können allein oder in Kombination den Ausfall eines Thermoelementes verursachen.
US 2930827 hat eine Temperatursonde zum Gegenstand, bei welcher das Thermoelement unbeweglich in dem Sondenrohr geführt ist. Kommt es zu einem Ausfall eines Thermoelementes, so wird die komplette Temperatursonde ausgebaut, demontiert, und nach dem Austausch des defekten Thermoelementes wird die Temperatursonde wieder installiert. Der Aufwand für eine derartige Reparatur kann annähernd 60% des Neupreises der Temperatursonde selbst erreichen, was eine derartige Reparatur, unter Berücksichtigung wirtschaftlicher Gesichtspunkte, fragwürdig erscheinen lassen kann.
Die Lösung gemäss DE 1138252 stellt eine Variante einer Temperatursonde vor, die einen leichten Ausbau des Thermoelements über die im Heissgaskanal angeordnete Stirnseite der Sonde ermöglicht. Dies hat den Nachteil, dass für Reparatur- oder Wartungszwecke stets ein Zutritt zu dem Heissgaskanal gewährleistet sein muss.

### DARSTELLUNG DER ERFINDUNG

Der Erfindung liegt die Aufgabe zugrunde, eine Temperatursonde der eingangs genannten Art dahingehend weiterzuentwickeln, dass der Aufbau der Temperatursonde erheblich vereinfacht wird, und damit gleichzeitig der Zugang zu einem in der Temperatursonde installierten Thermoelement derart erleichtert wird, dass der Austausch eines Thermoelements an einer montierten Temperatursonde durchführbar ist.

Erfindungsgemäss wird diese Aufgabe durch eine Temperatursonde mit den im unabhängigen Patentanspruch genannten Merkmalen gelöst.

Die Vorteile der Erfindung sind unter anderem darin zu sehen, dass durch die im wesentlichen geführte Anordnung eines jeden Thermoelements in einem Schutzrohr, die Thermoelemente völlig unabhängig von mechanischen Spannungen bleiben, welche aufgrund unterschiedlicher Wärmeausdehnungen aller eine Temperatursonde umfassenden Bauteile mit ihren spezifischen Expansionskoeffizienten auftreten. Die Bruchgefahr eines Thermoelementes wird somit entscheidend reduziert.

### KURZE BESCHREIBUNG DER ZEICHNUNG

In der Zeichnung ist ein Ausführungsbeispiel der Erfindung dargestellt, welches nachfolgend näher erläutert wird. Es zeigen:
- Fig. 1: im Längsschnitt den Aufbau einer Temperatursonde;
- Fig. 2: einen Schnitt durch die Temperatursonde nach der Linie II - II gemäss Fig. 1;
- Fig. 3: einen Schnitt durch die Temperatursonde nach der Linie III - III gemäss Fig. 1.

Es sind nur die für das Verständnis der Erfindung wesentlichen Elemente gezeigt. Nicht dargestellt ist beispielsweise eine im allgemeinen bekannte Befestigung einer Temperatursonde an dem Abgasdiffusor einer Gasturbine.

### WEG ZUR AUSFÜHRUNG DER ERFINDUNG

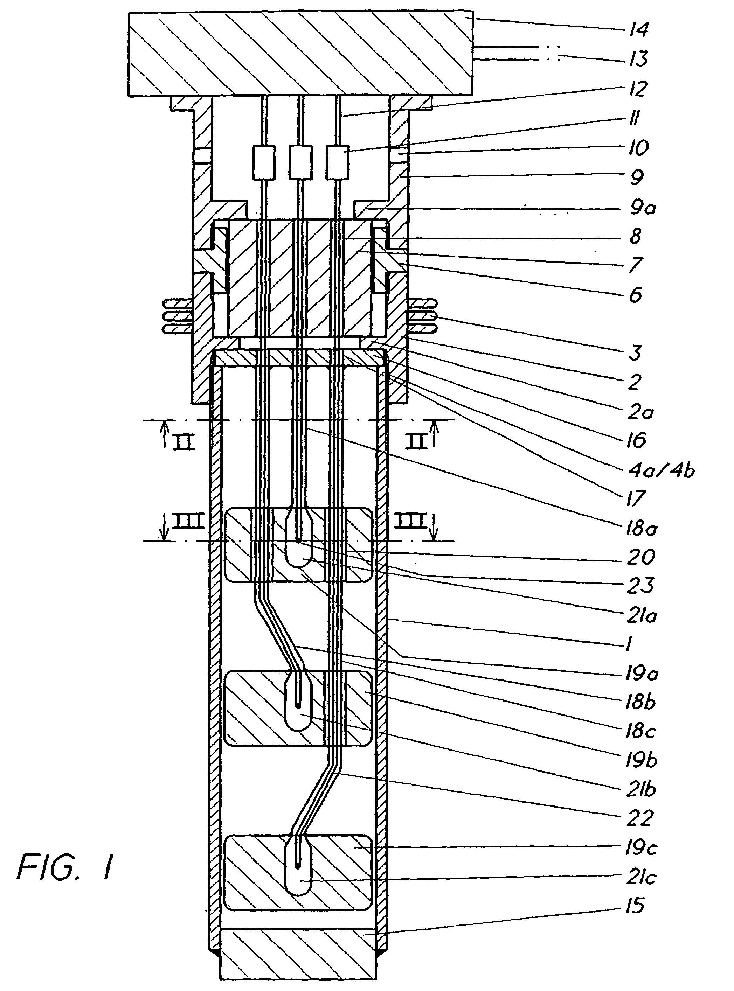

In Fig. 1 ist eine Temperatursonde im Längsschnitt dargestellt, wie sie beispielsweise in einem hier nicht dargestellten Abgasdiffusor einer Gasturbine Anwendung findet. Dabei ist eine derartige Temperatursonde bezüglich ihrer Installation in zwei Teile gliederbar.
Ein erster Teil ragt in den Heissgasbereich des Abgasdiffusors hinein und umfasst im wesentlichen ein Sondenrohr 1, dass mit Thermoelementen 22 ausgestattet ist und am unteren Ende mit einem Sondenrohrverschluss 15 abschliesst. Ein zweiter Teil der Temperatursonde ist ausserhalb des Heissgasraumes angeordnet und umfasst im wesentlichen ein Kühlrohr 2 mit Kühlrippen 3, eine Rohrdurchführung 6 mit einem innenliegenden Dichtungszylinder 7 und eine Klemmenbox 14, die durch einen Adapter 9 mit der Rohrdurchführung 6 verbunden ist.

Das Sondenrohr 1 weist in Richtung seiner Rohrachse eine Innenbohrung auf, und desweiteren ist das Sondenrohr 1 an seinem oberen Ende mit einem Aussengewinde 4b versehen. Dieses Aussengewinde 4b greift in einem Innengewinde 4a des Kühlrohres 2 an, wobei das Innengewinde 4a bis zu einer radialen Verengung 2a im Innern des Kühlrohres 2 geschnitten ist. Durch die Verschraubung des Sondenrohres 1 mit dem Kühlrohr 2 wird eine Lochscheibe 16 zwischen dem oberen Ende des Sondenrohres 1 und der radialen Verengung 2a innerhalb des Kühlrohres 2 verspannt.

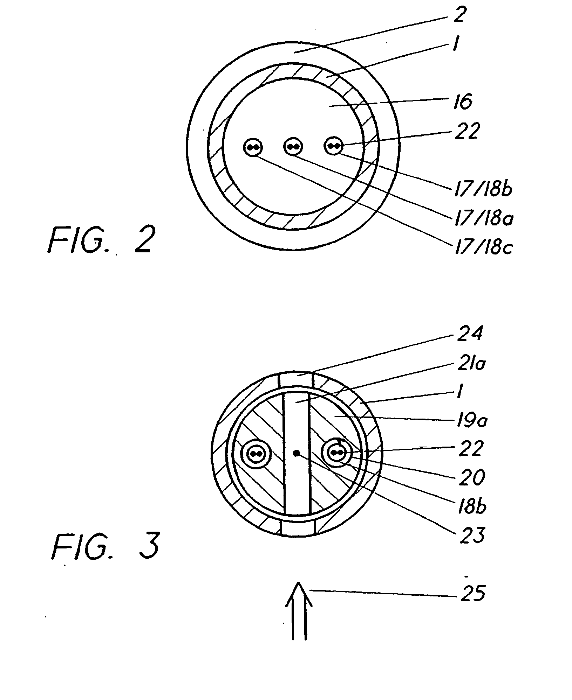

Die Lochscheibe 16 weist drei Bohrungen 17 auf, zu denen fluchtend an der Unterseite der Lochscheibe 16 drei Schutzrohre 18a,b,c angeschweisst sind
In Fig. 2 wird diese Anordnung der Lochscheibe 16 nochmals verdeutlicht. Die Schutzrohre 18a,b,c sind konzentrisch zu den Bohrungen 17 in der Lochscheibe 16 mit derselben verbunden, wobei die Innendurchmesser der Schutzrohre 18a,b,c nicht kleiner sind als die der Bohrungen 17.

In Fig. 1 ist mit 19a ein Gleitzylinder bezeichnet, dessen Zylinderachse koaxial zur Innenbohrung des Sondenrohres 1 verläuft, wobei der Durchmesser des Gleitzylinders 19a gerade um soviel kleiner ist als der Durchmesser der Innenbohrung, dass der Gleitzylinder 19a zwar axial geführt verschiebbar ist, aber in keinem thermischen Zustand mit dem Sondenrohr 1 aufgrund unterschiedlicher Expansionskoeffizienten eine klemmende Verbindung eingeht.

In der Mitte ist der Gleitzylinder 19a senkrecht zu seiner Zylinderachse mit einem Durchströmkanal 21a versehen. Das mit der Lochscheibe 16 verschweisste Schutzrohr 18a ist an seinem unteren Ende ebenfalls mit dem Gleitzylinder 19a verschweisst, wobei das Schutzrohr 18a in den Durchströmkanal 21a des Gleitzylinders 19a mündet. Der Gleitzylinder 19a ist somit mittels Schutzrohr 18a direkt mit der Lochscheibe 16 verbunden. Thermisch verursachte Spannungen zwischen einem Gleitzylinder 19a und dem Sondenrohr 1 werden durch diese Anordnung vermieden.

Beiderseits des Durchströmkanals 21a weist der Gleitzylinder 19a parallel zu seiner Zylinderachse je eine Bohrung 20 auf, durch die jeweils ein Schutzrohr 18b,c lose geführt ist. Das Schutzrohr 18b ist unterhalb des Gleitzylinders 19a zur Zylinderachse des Gleitzylinders 19b gebogen und mit diesem Gleitzylinder 19b verschweisst, wobei das Schutzrohr 18b in einen Durchstömkanal 21b mündet.
Das Schutzrohr 18c ist gemäss der obigen Beschreibung durch eine Bohrung des Gleitzylinders 19b geführt, unterhalb des Gleitzylinders 19b zur Zylinderachse des Gleitzylinders 19c gebogen und mit diesem verschweisst, wobei das Schutzrohr 18c in einen Durchströmkanal 21c mündet.

In den Schutzrohren 18a,b,c ist jeweils ein Thermoelement 22 geführt angeordnet, deren Verbindungspunkte 23 in den Durchströmkanälen 21a,b,c angeordnet sind.
Fig. 3 verdeutlicht am Beispiel eines Schnitts durch den Gleitzylinder 19a die Lage des Verbindungspunktes 23 in dem Durchströmkanal 21a. Dieser Durchströmkanal 21a mündet in einen Durchströmkanal 24 des Sondenrohres 1, wobei der Durchströmkanal 24 des Sondenrohres 1 und der Durchströmkanal 21 des Gleitzylinders 19a zueinander fluchtend in Strömungsrichtung 25 des Heissgases angeordnet sind.

Im folgenden wird wiederum anhand Fig. 1 der konstruktive Aufbau der Temperatursonde oberhalb der im Kühlrohr 2 verspannten Lochscheibe 16 beschrieben. Hierbei handelt es sich also um den Teil der Temperatursonde, der nicht in den Heissgasstrom des Abgasdiffusors hineinragt.
Zwischen dem Kühlrohr 2, dass an seinem Umfang mit einer Anzahl Kühlrippen 3 versehen ist, und einem Adapter 9 ist eine Rohrdurchführung 6 verschraubt. Der Adapter 9 ist innen mit einer radialen Verengung 9a versehen. Zwischen dieser Verengung 9a und der Verengung 2a des Kühlrohres 2 ist ein Dichtungszylinder 7 verspannt, der aus einem elastischen, thermisch stabilen Kunststoff besteht und drei Bohrungen 8 aufweist. Durch diese Bohrungen 8 sind die Thermoelemente 22 geführt. Beim Verschrauben der Rohrdurchführung 6 am Kühlrohr 2 und am Adapter 9 wird der Dichtungszylinder 7 derart zwischen den Verengungen 9a und 2a gestaucht, dass die Thermoelemente 22 in den Bohrungen 8 gasdicht verklemmt werden. Diese gasdichte Fixierung ist für die Thermoelement 22 die einzige Befestigung in der Temperatursonde. Ansonsten sind die Thermoelemente lediglich geführt in den Schutzrohren 18a,b,c angeordnet. Somit können keine mechanische Spannungen aufgrund unterschiedlicher thermischer Expansion der die Temperatursonde umfassenden Bauteile auf die Thermoelemente übertragen werden.

Im Adapter 9 ist jedes Thermoelement 22 über eine direkte Verbindung 11 mit einer Leitung 12 verbunden. Zur Kühlung dieser direkten Verbindung 11, ist der Adapter 9 mit einer Anzahl Kühlöffnungen 10 versehen. In einer Klemmenbox 14, die mit dem Adapter 9 verbunden ist, sind die Leitungen 12 an einem Verlängerungskabel 13 angeschlossen, welches die Verbindung zu einem hier nicht dargestellten Temperaturmesssystem darstellt.

Die einfache Anordnung und Fixierung der Thermoelemente 22 ermöglicht im Bedarfsfall den Austausch eines solchen Thermoelementes 22 an einer installierten Temperatursonde. Hierfür braucht nur die verschraubte Rohrdurchführung 6 gelöst zu werden, womit die Verklemmung im Dichtungszylinder 7 nachlässt und die Thermoelemente freigibt. Das auszutauschende Thermoelement kann dann aus einer hier nicht dargestellten verschliessbaren Öffnung der Klemmenbox 14 entnommen werden. Da die Bohrungen 8 im Dichtungszylinder 7 und die Bohrungen 17 in der Lochscheibe 16 fluchtend ausgerichtet sind, ist dann ein Ersatzthermoelement einfach installierbar in der Temperatursonde.

Selbstverständlich ist die Erfindung nicht auf das gezeigte und beschriebene Ausführungsbeispiel beschränkt. So ist weder die Anzahl installierter Thermoelemente in einem Gleitzylinder auf eins beschränkt, noch ist die Anzahl der Thermoelemente in dem hier dargestellten Ausführungsbeispiel auf drei beschränkt.

### BEZUGSZEICHENLISTE

- 1: Sondenrohr
- 2: Kühlrohr
- 2a: Verengung
- 3: Kühlrippe
- 4a: Innengewinde
- 4b: Aussengewinde
- 6: Rohrdurchführung
- 7: Dichtungszylinder
- 8: Bohrung
- 9: Adapter
- 9a: Verengung
- 10: Kühlöffnung
- 11: direkte Verbindung
- 12: Leitung
- 13: Ausgleichsleitung
- 14: Klemmenbox
- 15: Sondenrohrverschluss
- 16: Lochscheibe
- 17: Bohrung
- 18a,b,c: Schutzrohr
- 19a,b,c: Gleitzylinder
- 20: Bohrung
- 21a,b,c: Durchströmkanal
- 22: Thermoelement
- 23: Verbindungspunkt
- 24: Durchströmkanal
- 25: Strömungsrichtung des Heissgases

## Patentansprüche

1. Temperatursonde, insbesondere für den Einsatz im Abgasdiffusor einer Gasturbine, umfassend ein in den Heissgasbereich des Abgasdiffusors hineinragendes Sondenrohr (1) mit einer in Richtung der Rohrachse des Sondenrohres (1) verlaufenden Innenbohrung, wobei das Sondenrohr (1) über seine Länge mit einer Mehrzahl quer zur Rohrachse verlaufender Durchströmkanäle (24) versehen ist, eine Mehrzahl in der Innenbohrung des Sondenrohrs (1) angeordneter Thermoelemente (22), deren Verbindungspunkte (23) in den Durchströmkanälen (24) angeordnet sind, sowie eine ausserhalb des Heissgasbereichs angeordnete Klemmenbox (14), in der die Thermoelemente (22) mit einer Ausgleichsleitung (13) verbunden sind,
**dadurch gekennzeichnet,**
**dass** jedes der Thermoelemente (22) in einem separaten innerhalb der Innenbohrung des Sondenrohrs (1) angeordneten und bezüglich der Innenbohrung des Sondenrohres (1) ortsfesten Schutzrohr (18a, 18b, 18c) wärmebeweglich geführt angeordnet ist.

2. Temperatursonde nach Anspruch 1,
**dadurch gekennzeichnet,**
**dass** mindestens ein Gleitzylinder (19) an mindestens einem der Schutzrohre (18a, 18b, 18c) fixiert ist, und der mindestens eine Gleitzylinder (19) mit seiner Zylinderachse koaxial zur Rohrachse des Sondenrohres (1) in diesem Sondenrohr (1) geführt angeordnet ist.

3. Temperatursonde nach Anspruch 2,
**dadurch gekennzeichnet,**
**dass** jeder Gleitzylinder (19) mindestens einen quer zur Rohrachse des Sondenrohres (1) ausgerichteten Durchströmkanal (21) aufweist, der fluchtend zu einem der Durchströmkanäle (24) des Sondenrohres (1) angeordnet ist, und dass in dem mindestens einen Durchströmkanal (21) des Gleitzylinders (19) der Verbindungspunkt (23) mindestens eines der Thermoelemente (22) angeordnet ist.

## Claims

1. Temperature probe, in particular for use in the waste-gas diffusor of a gas turbine, comprising a probe tube (1) projecting into the hot-gas region of the waste-gas diffusor and having an inner bore running in the direction of the tube axis of the probe tube (1), the probe tube (1) being provided over its length with a plurality of throughflow ducts (24) running transversely relative to the tube axis, a plurality of thermocouples (22), which are arranged in the inner bore of the probe tube (1) and the connecting points (23) of which are arranged in the throughflow ducts (24), and a terminal box (14), which is arranged outside the hot-gas region and in which the thermocouples (22) are connected to a compensating line (13), **characterized in that** each of the thermocouples (22) is arranged in a heat-movably guided manner in a separate protective tube (18a, 18b, 18c) which is arranged inside the inner bore of the probe tube (1) and fixed relative to the inner bore of the probe tube (1).

2. Temperature probe according to Claim 1, **characterized in that** at least one sliding cylinder (19) is fixed to at least one of the protective tubes (18a, 18b, 18c), and the at least one sliding cylinder (19) is arranged in a guided manner in this probe tube (1) with its cylinder axis coaxial relative to the tube axis of the probe tube (1).

3. Temperature probe according to Claim 2, **characterized in that** each sliding cylinder (19) has at least one throughflow duct (21) which is oriented transversely relative to the tube axis of the probe tube (1) and which is arranged in alignment with one of the throughflow ducts (24) of the probe tube (1), and **in that** the connecting point (23) of at least one of the thermocouples (22) is arranged in the at least one throughflow duct (21) of the sliding cylinder (19).

## Revendications

1. Sonde de température, notamment pour l'utilisation dans le diffuseur de gaz d'échappement d'une turbine à gaz, comprenant un tube de sonde (1) pénétrant dans la zone des gaz chauds du diffuseur de gaz d'échappement avec un perçage interne s'étendant dans la direction de l'axe du tube de sonde (1), le tube de sonde (1) étant pourvu sur sa longueur d'une pluralité de canaux d'écoulement (24) s'étendant transversalement à l'axe du tube, une pluralité de thermocouples (22) disposés dans le perçage interne du tube de sonde (1), dont les points de connexion (23) sont disposés dans les canaux d'écoulement (24), ainsi qu'un bornier (14) disposé en dehors de la zone des gaz chauds, dans lequel les thermocouples (22) sont connectés à un conducteur d'équilibrage (13),
**caractérisée en ce que**
chacun des thermocouples (22) est disposé de manière guidée par déplacement thermique dans un tube protecteur (18a, 18b, 18c) séparé disposé à l'intérieur du perçage interne du tube de sonde (1) et fixe par rapport au perçage interne du tube de sonde (1).

2. Sonde de température selon la revendication 1,
**caractérisée en ce qu'**
au moins un cylindre coulissant (19) est fixé sur au moins l'un des tubes protecteurs (18a, 18b, 18c) et l'au moins un cylindre coulissant (19) est disposé de manière guidée dans ce tube de sonde (1) avec son axe de cylindre coaxial à l'axe du tube de sonde (1).

3. Sonde de température selon la revendication 2,
**caractérisée en ce que**
chaque cylindre coulissant (19) présente au moins un canal d'écoulement (21) orienté transversalement à l'axe du tube de sonde (1), qui est disposé en affleurement par rapport à l'un des canaux d'écoulement (24) du tube de sonde (1), et **en ce que** dans l'au moins un canal d'écoulement (21) du cylindre coulissant (19), est disposé le point de connexion (23) d'au moins l'un des thermocouples (22).
